# EUROPEAN PATENT APPLICATION

(11) **EP 4 744 787 A1**
(43) Date of publication of application: **20.05.2026**
(21) Application number: 25210814.7
(22) Date of filing: 23.10.2025
(51) Int. Cl.: B05C 9/12, B05C 11/06, B05D 1/26, B05D 1/40, B05D 3/04, B05D 7/14, H01M 4/139, B05C 5/02, B05D 3/02, H01M 4/04, B05C 11/10

(54) **ELECTRODE SHEET MANUFACTURING APPARATUS AND METHOD**

(30) Priority: 18.11.2024 KR 20240164084
(71) Applicant: SAMSUNG SDI CO., LTD., Yongin-si, Gyeonggi-do 17084 (KR)
(72) Inventor: YU, Donguk, 17084 Yongin-si, Gyeonggi-do (KR); CHO, Hyunjae, 17084 Yongin-si, Gyeonggi-do (KR); HAM, Seunghwa, 17084 Yongin-si, Gyeonggi-do (KR); LIM, Junghwan, 17084 Yongin-si, Gyeonggi-do (KR); CHOI, Jihwan, 17084 Yongin-si, Gyeonggi-do (KR)
(74) Representative: Gulde & Partner

(57) **Abstract**

An electrode sheet manufacturing apparatus (1) comprising:
a coating part (100) configured to apply electrode slurry onto a substrate (10) to form a coating layer;
a spraying part (200) configured to spray compression gas onto the coating layer;
a drying part (300) configured to supply a heat source onto the substrate (10) to dry the coating layer;
a measurement part (400) arranged spaced apart from the substrate (10) and configured to measure a thickness of an edge portion forming an edge of the coating layer; and
a control part electrically connected to the measurement part (400) and configured to detect a change in thickness of the edge portion based on receipt of a thickness value of the edge portion from the measurement part.

## Description

One or more embodiments relate to an electrode sheet manufacturing apparatus and a manufacturing method thereof, and more particularly, an electrode sheet manufacturing apparatus with improved production efficiency and quality, and a manufacturing method thereof.

### RELATED ART

A secondary battery is designed to be charged and discharged (e.g., are rechargeable), unlike a primary battery which is not designed to be rechargeable. Low-capacity secondary batteries are used in portable small-sized electronic devices, such as smartphones, feature phones, laptop computers, digital cameras, and camcorders, while high-capacity secondary batteries are widely used as energy sources for driving motors in hybrid vehicles, electric vehicles, and the like, and for power storage.

A secondary battery generally includes an electrode assembly having a positive electrode and a negative electrode, a case housing the electrode assembly, electrode terminals connected to the electrode assembly, and the like.

An electrode sheet may be wound and stacked to form an electrode assembly, and may be generally manufactured by applying electrode slurry onto a substrate, such as aluminum foil or copper foil.

The above-described information disclosed in the background technology of this disclosure is only intended to improve understanding of the background of the disclosure and therefore may include information that does not constitute the prior art.

### SUMMARY

One or more embodiments of the present disclosure provide an electrode sheet manufacturing apparatus for reducing material loss and improving production yield by measuring a thickness of an edge portion forming an edge of a coating layer formed on a substrate and displaying a warning signal based on detecting a change in thickness, and a manufacturing method thereof.

One or more embodiments of the present disclosure provide an electrode sheet manufacturing apparatus that controls operations of different devices (e.g., in real time) to adjust a thickness based on detecting a change in thickness of an edge portion for achieving a substantially even surface and for improving quality of an electrode sheet, and a manufacturing method thereof.

However, embodiments of the disclosure are not restricted to the ones described herein, and other embodiments of the disclosure will become more apparent to one of ordinary skill in the art to which the disclosure pertains by referencing the detailed description of the disclosure given below.

According to one or more embodiments, an electrode sheet manufacturing apparatus includes a coating part configured to apply electrode slurry onto a substrate to form a coating layer, a spraying part configured to spray compression gas onto the coating layer, a drying part configured to supply a heat source onto the substrate to dry the coating layer, a measurement part arranged spaced apart from the substrate and configured to measure a thickness of an edge portion forming an edge of the coating layer, and a control part electrically connected to the measurement part and configured to detect a change in the thickness of the edge portion based on receipt of a thickness value of the edge portion from the measurement part.

In an embodiment of the present disclosure, the electrode sheet manufacturing apparatus may further include a display part configured to receive an electric signal from the control part and display a warning signal based on detecting the change in the thickness of the edge portion.

In an embodiment of the present disclosure, the control part may be configured to receive an electrical signal from the measurement part and control an operation of one of the coating part, the spraying part, or the drying part based on detecting the change in the thickness of the edge portion.

In an embodiment of the present disclosure, the coating layer may include a plurality of coating layers on the substrate, wherein the plurality of coating layers may be spaced apart from one another in a width direction of the substrate.

In an embodiment of the present disclosure, the measurement part may include a plurality of measuring sensors, and each of the plurality of measuring sensors may be arranged between adjacent coating layers of the plurality of coating layers arranged spaced apart from one another.

In an embodiment of the present disclosure, each of the plurality of measuring sensors may be configured to concurrently measure a thickness of an uncoated portion as an area and thickness of first and second edge portions forming first and second edges of the coating layers located on opposite sides of the uncoated portion, where the uncoated portion is free of the electrode slurry and is located between neighboring coating layers.

In an embodiment of the present disclosure, the control part may set a thickness of the edge portion as a reference value and detect the change in the thickness based on the measured thickness of the edge portion deviating by an identified range compared to the reference value.

In an embodiment of the present disclosure, the edge portion may include a plurality of edge portions on the substrate, and the control part may be configured to control one of spraying angle, spraying pressure, or spraying position of the spraying part arranged above certain edge portions based on detecting the change in the thickness at the certain edge portions among the plurality of edge portions.

In an embodiment of the present disclosure, the edge portion may include a plurality of edge portions on the substrate, and the control part may be configured to control an amount of the electrode slurry applied by the coating part based on detecting the change in the thickness is detected at the plurality of edge portions.

In an embodiment of the present disclosure, the edge portion may include a plurality of edge portions on the substrate, and the control part may be configured to control drying conditions of the drying part based on detecting lifting of the edge portion from the substrate.

According to one or more embodiments, an electrode sheet manufacturing method may include forming a coating layer by applying electrode slurry onto a substrate, controlling a thickness of the coating layer by spraying compression gas onto the coating layer, drying the electrode slurry applied on the substrate, measuring a thickness of an edge portion forming an edge of the coating layer, and determining a change in the thickness value of the edge portion by comparing the measured thickness of the edge portion with a reference value for the thickness of the edge portion.

In an embodiment of the present disclosure, the determining the change in the thickness of the edge portion may include detecting a position of the coating layer based on one or more conditions, wherein the one or more conditions may be set based on a thickness of the substrate.

In an embodiment of the present disclosure, the determining the change in the thickness of the edge portion may include setting an area located at a distance from one end of the coating layer as a range of the edge portion.

In an embodiment, the determining the change in the thickness of the edge portion may include setting a reference value for the thickness of the edge portion, and detecting the change in the thickness of the edge portion by comparing the measured thickness value of the edge portion with the reference value.

In an embodiment of the present disclosure, the setting the reference value for the thickness of the edge portion may include setting an average of thickness values of the edge portion, measured a plurality of times, as the reference value.

In an embodiment of the present disclosure, the electrode sheet manufacturing method may further include displaying a warning signal based on detecting the change in the thickness of the edge portion.

In an embodiment of the present disclosure, the electrode sheet manufacturing method may further include controlling an operation of one of forming the coating layer, spraying the compression gas, or drying the electrode slurry based on detecting the change in the thickness of the edge portion.

In an embodiment of the present disclosure, the controlling the operation based on detecting the change in the thickness of the edge portion may include controlling one of a spraying pressure, spraying angle, or spraying position of the compression gas sprayed onto certain edge portions based on detecting the change in the thickness at the certain edge portions among a plurality of edge portions formed on the substrate.

In an embodiment of the present disclosure, the controlling the operation based on detecting the change in the thickness of the edge portion may include controlling an amount of the applied electrode slurry based on detecting the change in the thickness at a plurality of edge portions formed on the substrate.

In an embodiment of the present disclosure, the controlling the operation based on detecting the change in the thickness of the edge portion may include controlling drying conditions of the electrode slurry based on detecting lifting of the edge portion from the substrate.

One or more embodiments of the present disclosure are also directed to an electrode sheet manufacturing apparatus comprising: a die above a surface of a substrate, the die configured to apply electrode slurry onto the substrate to generate a coating layer on the substrate; a sprayer having a spray nozzle for spraying compression gas onto the coating layer; a dryer configured to supply a heat source onto the substrate to dry the coating layer; a sensor spaced apart from the substrate and configured to measure a thickness of an edge portion forming an edge of the coating layer; and a controller electrically connected to the sensor and configured to receive a thickness value of the edge portion from the sensor to detect a change in thickness of the edge portion.

### BRIEF DESCRIPTION OF THE DRAWINGS

The following drawings attached to this specification illustrate one or more embodiments of the disclosure and, together with the detailed description of the disclosure described below, serve to further understand the technical idea of the disclosure; therefore, the disclosure should not be interpreted as being limited to matters described in such drawings:
FIG. 1 is a schematic diagram of an electrode sheet manufacturing apparatus according to an embodiment of the present disclosure;
FIG. 2 is a view of a state where a spraying part according to an embodiment of the present disclosure sprays compression gas onto a coating layer;
FIG. 3 is a view of a state where a measurement part according to an embodiment of the present disclosure measures a thickness of the substrate;
FIG. 4 is a cross-sectional view taken along line I-I' of FIG. 3;
FIG. 5 is a block diagram of an electrode sheet manufacturing apparatus according to an embodiment of the present disclosure;
FIG. 6 is a flowchart of an electrode sheet manufacturing method according to an embodiment of the present disclosure;
FIG. 7 is a flowchart illustrating some steps of FIG. 6 in detail; and
FIG. 8 is a flowchart illustrating other steps of FIG. 6 in detail.

### DETAILED DESCRIPTION

Hereinafter, one or more embodiments of the disclosure will be described in detail with reference to the attached drawings. The terms or words used in this specification and claims should not be interpreted as limited to their usual or dictionary meanings, and should be interpreted as meanings and concepts that conform to the technical idea of the disclosure based on the principle that the inventor may appropriately define the concept of the term to explain his or her own invention in the best way. Therefore, the embodiments described in this specification and the configurations illustrated in the drawings are only some of the embodiments of the disclosure and do not represent all of the technical ideas of the disclosure, and it should be understood that there may be various equivalents and modified examples that may replace those embodiments at the time of filing this application.

Additionally, the terms "comprise or include" and/or "comprising or including" as used herein specify the presence of stated features, numbers, steps, operations, members, elements, components, and/or groups thereof, but do not preclude the presence or addition of one or more other features, numbers, operations, members, elements, components, and/or groups thereof. In describing embodiments of the disclosure, the terms "may" and "may be" may include "one or more embodiments of the disclosure."

To help understanding of the disclosure, the accompanying drawings are not drawn to scale, but the dimensions of some components may be exaggerated. Furthermore, the same element in different embodiments may be given the same reference number.

The expression indicating that the two comparison targets are "equal" to each other means that the two comparison targets are "substantially equal" to each other. Therefore, the substantial equality may include a case in which a deviation considered as being at a low level in the art is present, for example, a deviation within 5% is present. In addition, a configuration in which a certain parameter is constant in a predetermined region may mean that the parameter is constant from an average point of view.

Although the terms including ordinal numbers such as "first," "second," and the like may be used herein to describe various components, these components are not limited by these terms. These terms are used to distinguish one component from another, and unless otherwise stated or the context clearly indicates otherwise, a first component may be a second component.

Throughout the specification, unless otherwise stated or unless the context clearly indicates otherwise, each component may be singular or plural.

In case that any component is arranged at "an upper portion (or a lower portion)" of the component or "on (or under)" the component, any component may be arranged in contact with an upper surface (or a lower surface) of the component, and another component may be interposed between the component and any component arranged on (or under) the component.

Additionally, when it is described that a component is "connected," "coupled," or "fastened" to another component, it should be understood that the components may be directly connected or fastened to one another, but that other components may also be interposed between the components, or that each component may be "connected," "coupled," or "connected" through another component. Also, when it is said that a part is electrically coupled to another part, this includes not only cases where they are directly connected, but also cases where they are connected with another element in between.

Whenever reference is made throughout the specification to "A and/or B," this means A, B, or A and B, unless otherwise specified. That is, "and/or" includes all or any combination of a plurality of listed items. "C through D" refers to C or more and D or less, unless otherwise specified.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c,"at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

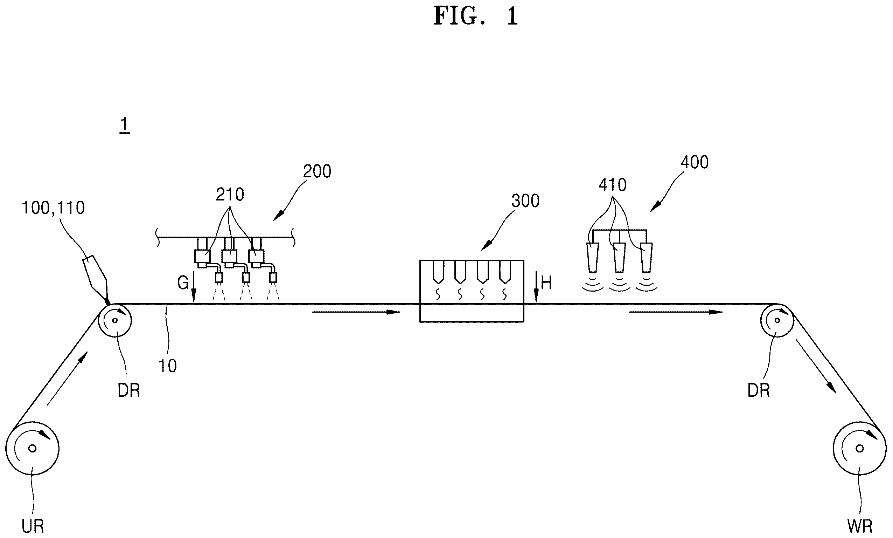

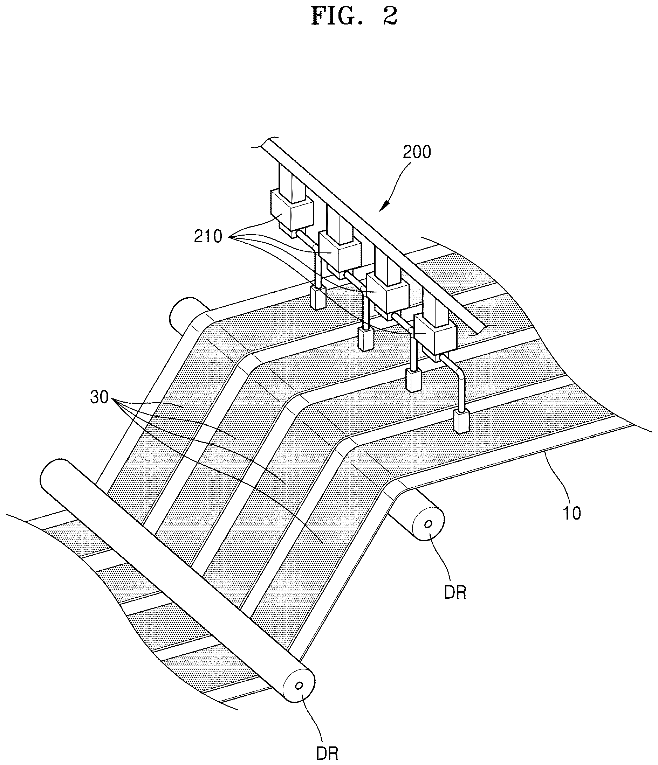

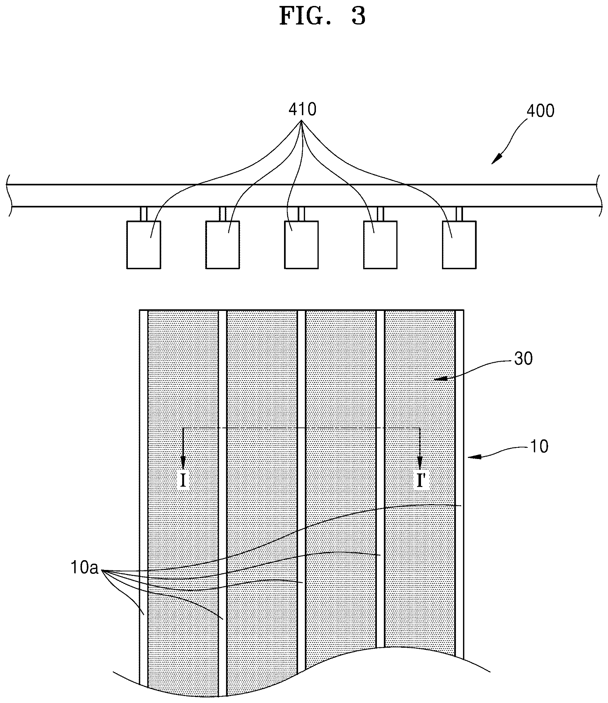

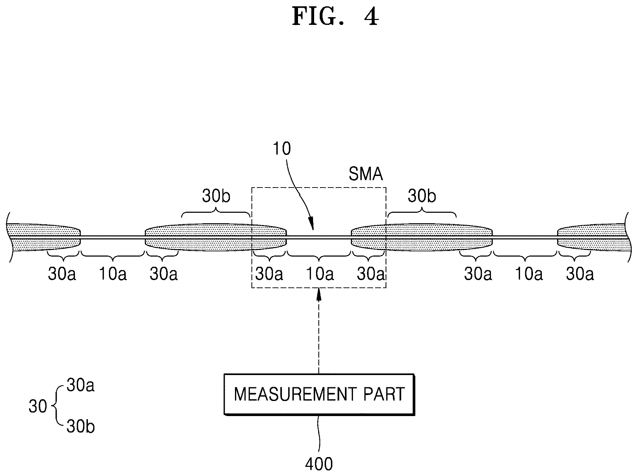

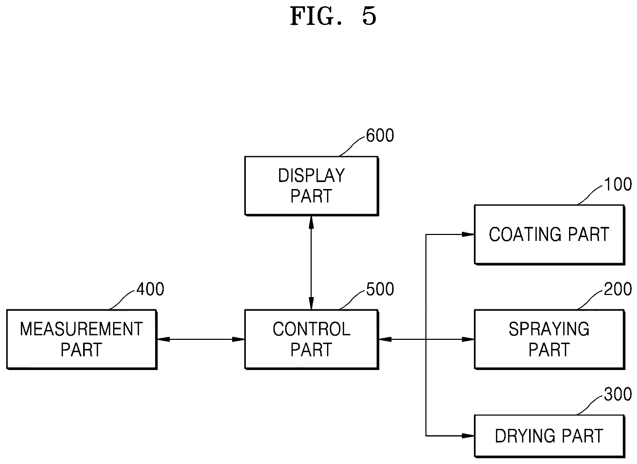

FIG. 1 is a schematic diagram of an electrode sheet manufacturing apparatus according to an embodiment of the present disclosure. FIG. 2 is a view of a state where a spraying part according to an embodiment of the disclosure sprays compression gas onto a coating layer. FIG. 3 is a view of a state where a measurement part according to an embodiment of the present disclosure measures a thickness of the substrate. FIG. 4 is a cross-sectional view taken along line I-I' of FIG. 3. FIG. 5 is a block diagram of an electrode sheet manufacturing apparatus according to an embodiment of the present disclosure.

As schematically illustrated in FIG. 1, an electrode sheet manufacturing apparatus 1 according to an embodiment of the present disclosure may produce an electrode used in a secondary battery, such as a lithium ion battery. The electrode sheet may be a positive electrode sheet forming a positive electrode of the secondary battery or a negative electrode sheet forming a negative electrode.

In some embodiments, the electrode sheet may be used as an electrode for batteries, such as lithium ion batteries, and may be manufactured by applying electrode slurry onto a substrate 10. In some embodiments, the electrode sheet may participate in the electrochemical reactions of a battery, contributing to the storage and release of energy.

In some embodiments, the substrate 10 includes a base material on which electrode slurry is coated. In general, a positive electrode sheet may use aluminum foil and a negative electrode sheet may use copper foil, but are not limited thereto, and various modifications may be implemented by using copper foil, nickel foil, stainless steel foil, titanium foil, nickel foam, copper foam, a polymer substrate coated with a conductive metal, and the like.

In some embodiments the, electrode slurry may include a mixed material used to manufacture an electrode plate, and may include a material mixed with an active material, a binder, an electrical conductor, a solvent, and the like.

An electrode sheet manufacturing apparatus 1 according to an embodiment of the present disclosure may include a transfer part or device DR, an unwinding part or device UR, a winding part or device WR, a coating part or device 100, a spraying part or device 200, a drying part or device 300, a measurement part or device 400, a control part or device 500, and a display part or device 600.

Referring to FIG. 1, the transfer part DR may transfer the substrate 10 along an identified or a preset direction, and may transfer the substrate 10 along the transfer direction while maintaining tension of the substrate 10 constant.

Referring to FIG. 1, the transfer part DR may be positioned to be in contact with one surface of the substrate 10 and may include one or more rotatable transfer rollers. The transfer rollers may be arranged between components of the electrode sheet manufacturing apparatus 1 to transfer the substrate 10 in the transfer direction while supporting the substrate 10 in contact with the substrate 10. In some embodiments, the transfer direction may be a longitudinal direction of the substrate 10.

In some embodiments, the respective components of the electrode sheet manufacturing apparatus 1 may operate while the substrate 10 is transferred on the transfer part DR.

Referring to FIG. 1, the unwinding part UR may unwind a rolled substrate 10 from a rolled state to an unrolled state. In some embodiments, the substrate 10 may be unwound at constant speed supplied to the coating part 100. The substrate 10, unrolled via the unwinding part UR, may be transferred along the transfer direction (to right in FIG. 1)for being manufactured into an electrode sheet.

The winding part WR may be designed to wind the manufactured electrode sheet (e.g., the completely manufactured electrode sheet) back into a roll shape for storage. Similar to the unwinding part UR, the winding part WR may wind the electrode sheet while maintaining a constant speed and tension for suppressing or reducing damage to the electrode sheet.

Referring to FIG. 1, the coating part 100 may be designed to form a coating layer 30 by applying electrode slurry onto the substrate 10. In some embodiments, the coating part may include a slot die 110.

Referring to FIG. 1, the slot die 110 may be a component that is positioned apart from the substrate 10 and which applies the electrode slurry onto the substrate 10. The slot die 110 may be arranged (e.g., fixedly installed) above one surface (upper surface based on FIG. 1) of the substrate 10 while maintaining an identified or a preset gap from the substrate 10.

The slot die 110 according to an embodiment of the present disclosure may apply (e.g., evenly apply) the electrode slurry through a long, slot-shaped nozzle. However, the slot die 110 is not limited to this configuration, and the slot die 110 may be modified into one or more components, such as a roller, spray, or brush, as being suitable within the technical concept of applying the electrode slurry onto the substrate 10.

In some embodiments, the coating part 100 may further include a slurry pump (not illustrated in the drawing). The slurry pump may be connected to the slot die 110. The slurry pump may mix electrode materials (active material, binder, and solvent) to create the electrode slurry, and transfer the created electrode slurry to the slot die 110, thus advantageously facilitating the smooth application of the electrode slurry onto the substrate 10.

The operation of the slurry pump according to an embodiment of the present disclosure may be controlled by the control part 500. In some embodiments, a flow rate of the electrode slurry supplied to the slot die 110 may be controlled, and a discharge amount of the electrode slurry applied onto the substrate 10 may also be controlled.

Referring to FIGS. 2 and 3, the electrode slurry applied onto the substrate 10 may form the coating layer 30. The coating layer 30 may be formed with an identified or a preset thickness and may form a certain pattern on the substrate 10 depending on an application method.

In some embodiments, the coating layer 30 may extend long along the longitudinal direction of the substrate 10. In some embodiments, the coating layer 30 may be formed as one or more layers on the substrate 10. The one or more coating layers 30 may be spaced apart along a width direction of the substrate 10.

In some embodiments, an area between the adjacent coating layers 30 may be an area where the electrode slurry is not applied, and may expose a surface of the substrate 10. In some embodiments, an area where the coating layer 30 is not formed on the substrate 10 (hereinafter, referred to as an uncoated portion 10a) may be located between the adjacent coating layers 30.

However, embodiments of the present disclosure are not limited to having the uncoated portion 10a between adjacent coating layers 30, but may extend to embodiments where the uncoated portion 10a is arranged on an outer side of the coating layer 30, which is formed on an end portion of the substrate 10. According to some embodiments, the coating layer 30 may be arranged only on one side of the uncoated portion 10a.

The slot die 110 according to an embodiment of the present disclosure may be arranged as one or more slot dies on the substrate 10. The one or more slot dies 110 may apply the electrode slurry onto opposite surfaces of the substrate 10. In some embodiments, the coating layers 30 may be formed on the opposite surfaces of the substrate 10, respectively.

Referring to FIGS. 1 and 2, the spraying part (or sprayer) 200 may spray compression gas G onto the coating layer 30 to remove residual solvent and impurities present on the coating layer 30 and the surface of the substrate 10, and to adjust the thickness of the coating layer 30.

The compression gas G sprayed by the spraying part 200 according to an embodiment of the present disclosure may be general air. However, embodiments are not limited thereto, and the compression gas G may be modified into nitrogen, argon, helium, and the like as being suitable within the technical concept of removing impurities present on the coating layer 30 without causing or with reduced reactions with the coating layer 30.

The spraying part 200 may adjust the thickness of the coating layer 30 by spraying the compression gas G onto the coating layer 30 at an identified or a preset pressure. In some embodiments, the electrode slurry may be distributed by spraying the compression gas G onto the coating layer 30 on the substrate 10 to advantageously achieve, for example, a uniform thickness, to minimize or reduce surface unevenness of the coating layer 30 and to enhance the quality of the electrode sheet.

Referring to FIG. 2, the spraying part 200 may include one or more spraying nozzles 210 spaced apart at an identified or a preset interval. The one or more spraying nozzles 210 may be arranged in a row along the width direction of the substrate on which the coating layer 30 is formed.

Spraying angle, spraying position, and spraying distance of the spraying nozzles 210 according to an embodiment of the present disclosure may be individually adjusted. In some embodiments, the angles of the plurality of spraying nozzles 210 may be individually adjusted. In some embodiments, the spraying pressure of the compression gas G sprayed through the spraying nozzles 210 may be individually adjusted.

The operation of the spraying nozzles 210 according to an embodiment of the present disclosure may be controlled by the control part 500. In some embodiments, the spraying angle, spraying distance, spraying pressure, and the like of a single spraying nozzle 210 may be individually controlled by the control part 500, and thus the thickness of the coating layer 30 opposing a specific spraying nozzle 210 may be individually adjusted.

Referring to FIG. 1, the drying part (or dryer) 300 may supply a heat source H onto the substrate 10 to dry the coating layer 30. In some embodiments, the solvent in the coating layer 30 formed on the substrate 10 may be evaporated based on the heat to harden the coating layer 30 and to maintain a certain shape of the coating layer 30.

A drying method of the drying part 300 according to an embodiment of the present disclosure may include hot-air drying in which a hot-air blower is arranged inside a dryer to supply hot air, but is not limited thereto, and various drying methods, such as vacuum drying and infrared drying, may be adapted as being suitable within the technical concept of drying the coating layer 30 to evaporate the solvent.

The drying part 300 according to an embodiment of the present disclosure may be arranged as one or more drying parts on the substrate 10. In an embodiment where the coating layers 30 are formed on the opposite surfaces of the substrate 10, respectively, the one or more drying parts 300 may dry the respective coating layers 30 formed on the opposite surfaces of the substrate 10.

Referring to FIGS. 1 and 3, the measurement part 400 may be arranged spaced apart from the substrate 10 to measure a thickness of an edge portion 30a forming an edge of the coating layer 30. The measurement part 400 may measure a thickness value of the edge portion 30a and transmit the measured thickness value to the control part 500.

Referring to FIG. 3, the edge portion 30a may correspond to an edge area of the coating layer 30, and the uncoated portion 10a may be arranged on one side of the edge portion 30a. In some embodiments, the edge portions 30a may be arranged on opposite sides of one coating layer 30.

Generally, in the electrode sheet manufacturing apparatus 1, the electrode slurry may be coated on the substrate 10, dried (e.g., completely dried), and subjected to a secondary insulation coating. In an embodiment where the edge portion 30a warps upward or downward, the coating may not be properly performed or may peel off during the insulation coating process. Furthermore, uneven thickness may lead to an overall deterioration in quality of the electrode sheet.

In some embodiments the measurement part 400 arranged on the substrate 10 may measure the thickness of the edge portion 30a in real time (with a delay less than 0.2 s, preferably less than 0.1 s), and the operation of another device may be controlled (e.g., immediately controlled or controlled in real time) upon an occurrence of a problem, to precisely adjust the thickness of the coating layer 30 to improve the quality of the electrode sheet.

Referring to FIG. 3, the measurement part 400 may include one or more measuring sensors 410 spaced apart at an identified or a preset interval.

One or more (e.g., each) of the plurality of measuring sensors 410 may measure (e.g., concurrently or simultaneously measure) the thickness of the uncoated portion 10a, which is arranged between the neighboring coating layers 30 and is not coated with the electrode slurry, and thicknesses of the edge portions 30a forming the edges of the coating layers 30 arranged on the opposite sides of the uncoated portion 10a. The one or more measuring sensors 410 may be arranged in a row along the width direction of the substrate 10.

The measuring sensor 410 according to an embodiment of the present disclosure may include a profile sensor. However, embodiments of the present disclosure are not limited to a profile sensor, and another type of sensor including an ultrasonic sensor, a laser sensor, a charge-coupled device (CCD) camera, or the like may be adapted as the measuring sensor 410 as being suitable within the technical concept of measuring the thickness of the edge portion 30a without contacting the coating layer 30.

Referring to FIG. 3, the one or more of measuring sensors 410 may be arranged respectively above the uncoated portions 10a formed on the substrate 10. In some embodiments, the one or more of measuring sensors 410 may be arranged between adjacent coating layers of the one or more of coating layers 30 that are spaced apart from one another.

In some embodiments, the measuring sensor 410 may measure the thicknesses of the uncoated portion 10a and the edge portions 30a arranged on the opposite sides of the uncoated portion 10a.

Referring to FIG. 4, an area measured by one measuring sensor 410 may be defined as a sensor measurement area SMA. The sensor measurement area SMA may denote one uncoated portion 10a and two edge portions 30a arranged on the opposite sides of the uncoated portion 10a. In some embodiments, the edge portion 30a may be an area located 1 mm to 3 mm apart from one end of the coating layer 30 in a direction toward a center of the coating layer 30.

In some embodiments, the sensor measurement area SMA may include the uncoated portion 10a and areas extending up to 3 mm from the opposite sides of the uncoated portion 10a.

As many measuring sensors 410 may be provided as the number of uncoated portions 10a formed on the substrate 10. In this regard, the number of measuring sensors 410 may correspond to the number of uncoated portions 10a formed on the substrate 10. In some embodiments, one measuring sensor 410 may measure the thicknesses of two edge portions 30a (e.g., concurrently or simultaneously), but the measuring sensor 410 arranged at each of opposite ends of the coating layer 30 may measure the thickness of one edge portion 30a.

Heights and angles of the measuring sensors 410 according to an embodiment of the present disclosure may be individually adjusted. The height and angle of the corresponding measuring sensor 410 may be manually adjusted by an operator. However, embodiments are not limited to such manual adjustment and the height and angle of the measuring sensor 410 may be automatically adjusted by the control part 500.

As the angle and height of the measuring sensor 410 are individually adjusted, the reliability of thickness value data obtained by one measuring sensor 410 may be improved.

Referring to FIG. 5, the control part (e.g., controller) 500 may be electrically connected to the measurement part 400, and may detect the change in thickness of the edge portion 30a based on receiving the thickness value of the edge portion 30a from the measurement part 400. Based on detecting the change in thickness of the edge portion 30a via receipt of an electrical signal transmitted from the measurement part 400, the control part 500 may control an operation of one or more of the coating part 100, the spraying part 200, and the drying part 300.

In some embodiments, the control part 500 may be a manufacturing execution system (MES) that supports real-time monitoring and management of an electrode sheet production process.

The control part 500 according to an embodiment of the present disclosure may set a thickness of the edge portion 30a as a reference value, and may detect the change in thickness based on the measured thickness of the edge portion 30a deviating by an identified or a preset range compared to the reference value.

In some embodiments, the reference value for the thickness of the edge portion 30a may be a value obtained by averaging thickness values of the edge portion 30a measured one or more times (e.g., once per second) at one or more (e.g., each) location where the measuring sensors 410 are arranged.

In some embodiments, the reference value for the thickness of the edge portion 30a may be set by averaging the thickness values of the edge portion 30a measured ten times.

The control part 500 according to an embodiment of the present disclosure may detect the change in thickness based on the measured thickness value of the edge portion 30a increasing or decreasing by at least 10 percent compared to an identified or a preset reference value.

In some embodiments, the control part 500 may detect the change in the thickness of the edge portion 30a using a thickness value of a central portion 30b of the coating layer 30 as a reference value.

The central portion 30b as mentioned herein may refer to an area of the coating layer 30 excluding the edge portion 30a, and, for example, may refer to an area having the same distance from opposite ends of the coating layer 30.

In some embodiments, the thickness value of the central portion 30b of the coating layer 30 may be obtained in various ways.

The control part 500 according to an embodiment of the present disclosure may store the thickness value of the central portion 30b. In some embodiments, the thickness value of the central portion 30b may be measured (e.g., measure in real time, i.e. with a delay less than 0.2 s, preferably less than 0.1 s) by another component of the electrode sheet manufacturing apparatus 1 and transmitted to the control part 500.

In some embodiments, the control part 500 may set the thickness value of the central portion 30b as a reference value. In some embodiments, the change in the thickness of the edge portion 30a may be detected based on the thickness value of the edge portion 30a measured in real time (with a delay less than 0.2 s, preferably less than 0.1 s) being below a certain ratio compared to the thickness value of the central portion 30b.

In some embodiments, based on the thickness value of the edge portion 30a being less than about 70% of the thickness value of the central portion 30b, the control part 500 may detect a decrease in thickness of the edge portion 30a and control the operation of another component to adjust the thickness of the edge portion 30a.

Referring to FIG. 5, the control part 500 may control the operation of the spraying part 200. In an embodiment where the change in thickness is detected at certain edge portions 30a among the one or more of edge portions 30a, the control part 500 may control one or more (e.g., any one) of the spraying angle, spraying pressure, or spraying position of the spraying part 200 located above the certain edge portions 30a. However, embodiments are not limited thereto, and the control part 500 may control (e.g., concurrently or simultaneously control) the spraying angle, spraying pressure, and spraying position of the spraying part 200 according to the thickness and shape of the edge portion 30a.

In some embodiments, based on detecting an increase in thickness at certain edge portions 30a among the one or more of edge portions 30a, the control part 500 may control the operation of the spraying part 200 to increase the spraying pressure of the compression gas G, which is applied onto the edge portions 30a, such that the thickness of the corresponding edge portions 30a may decrease due to the increased (e.g., strong) spraying pressure.

In some embodiments, based on detecting a decrease in thickness at certain edge portions 30a among the one or more of edge portions 30a, the control part 500 may control the operation of the spraying part 200 to decrease the spraying pressure of the compression gas G, which is applied onto the edge portions 30a, such that the thickness of the corresponding edge portions 30a may increase due to the decreased (e.g., weak) spraying pressure.

Referring to FIG. 5, the control part 500 may control the operation of the coating part 100. The control part 500 may control an amount of electrode slurry applied by the coating part 100 based on detecting the change in thickness at one or more (e.g., all) of the one or more of edge portions 30a.

In an embodiment where the change in thickness is detected at one or more (e.g., all) of the one or more of edge portions 30a, the control part 500 may control a discharge amount of electrode slurry applied by the coating part 100 to adjust the thickness of the one or more (e.g., all) of the one or more of edge portions 30a.

In some embodiments, in an embodiment where the thicknesses of the edge portions 30a increase overall, the control part 500 may adjust the thicknesses of the edge portions 30a by decreasing an amount of electrode slurry discharged from the slurry pump (not illustrated in the drawing) of the coating part 100.

In another example, in case that the thicknesses of the edge portions 30a decrease overall, the control part 500 may increase the thicknesses of the edge portions 30a by increasing the amount of electrode slurry discharged from the slurry pump of the coating part 100.

However, control of the operation of the coating part 100 is not limited to when a change occurs in the thickness values of the one or more (e.g., all) of the one or more of edge portions 30a. For example, when change occurs in the thickness values of at least 80% of the edge portions 30a, a criterion, such as a method of controlling the coating part 100, may be set in various ways as needed.

Referring to FIG. 5, the control part 500 may control the operation of the drying part 300. The control part 500 may control drying conditions of the drying part 300 based on detecting the edge portion 30a lifted off or separated from the substrate 10.

In some embodiments, the edge portion 30a may lift off from the substrate 10 when the coating layer 30 or the edge portion 30a is partially separated from the substrate 10. The control part 500 may recognize that the lifting or separation has occurred based on detecting a change (e.g., an excessively great change) in thickness of the coating layer 30, compared to a typical thickness change. The detected change may be, for example, greater than a maximum threshold change.

In the event that the coating layer 30 is lifted off from the substrate 10, the completely manufactured electrode sheet may have an uneven surface, which may deteriorate battery performance. Furthermore, an adhesion between the coating layer 30 and the substrate 10 may weaken. This weakening may cause the coating layer 30 to peel off or be damaged, and may result in a short-circuit.

In general terms, when the temperature of the drying part 300 is excessively high (e.g., higher than a threshold temperature), an evaporation rate may increase, which may cause the surface of the substrate 10 to dry quickly. The rapid drying may trap moisture in the substrate 10 and raise pressure, and may trigger the lifting of the edge portion 30a.

In other examples, in the event that gas inside the drying part 300 does not properly circulate, the substrate 10 may dry unevenly or a temperature distribution inside the drying part 300 may become uneven, causing a partial area of the substrate 10 to be overheated or overcooled, which may lead to the lifting of the edge portion 30a.

In some embodiments, based on the control part 500 detecting the lifting phenomenon of the edge portion 30a, the control part 500 may adjust the internal temperature of the drying part 300 and an amount of gas circulating inside the drying part 300. In some embodiments, based on detecting the lifting of the edge portion 30a, in particular in real time, the control part 500 may reduce the internal temperature of the drying part 300 and increase the amount of gas circulating in the drying part 300 to reduce or suppress the lifting phenomenon of the edge portion 30a.

Referring to FIG. 5, the control part 500 may individually control the operations of the coating part 100, the drying part 300, and the spraying part 200. In some embodiments, the control part 500 may control the same simultaneously or concurrently (e.g., as needed). In other embodiments, the control part 500 may independently control the operations of the coating part 100, the drying part 300, and the spraying part 200.

Referring to FIG. 5, the display part 600 may output a warning signal based on receiving an electrical signal transmitted from the control part 500 indicating the change in the thickness of the edge portion 30a. The display part 600 may output visual information related to the thickness change of the edge portion 30a on a screen or output an alarm sound through a speaker. In some embodiments, the display part 600 may include a display device, such as a screen, or an audio output device, such as a speaker.

The display part 600 according to an embodiment of the present disclosure may collect various data generated during an electrode sheet manufacturing process (e.g., in real time, i.e. with a delay less than 0.2 s, preferably less than 0.1 s) and display the collected data. In the event that a problem occurs during the manufacturing process, the display part 600 may output a warning signal to send an alarm to an operator associated with a corresponding device.

In some embodiments, the operator may receive a warning signal regarding the thickness change of the edge portion 30a through the display part 600. Upon the detection of the thickness change, the control part 500 may control (e.g., automatically control) the operations of the coating part 100, the spraying part 200, and/or the drying part 300, and/or the operator who receives the warning signal through the display part 600 may control (e.g., manually control) the operations of the corresponding devices.

In some embodiments, in the event that the thickness change is detected at certain edge portions 30a, the operator may adjust the angles and/or positions of the spraying nozzles 210 of the spraying part 200. The operator may also normalize the thickness of the edge portions 30a by adjusting the spraying pressure.

The operator may adjust the amount of electrode slurry discharged from the slurry pump of the coating part 100 in the event that the thickness change is detected at one or more (e.g., all) of the one or more of edge portions 30a, and/or may adjust the temperature of the drying part 300 and/or the amount of gas circulating in the drying part 300 in the event that lifting of the edge portion 30a is displayed on the display part 600.

In some embodiments, in the event that the thickness change of the edge portion 30a is detected, the control part 500 may control the operations of the coating part 100, the spraying part 200, and the drying part 300, but is not limited to this, and an operator who receives a warning signal through the display part 600 may also control the operation of each device.

In this regard, the operation control by the control part 500 and the operation control by the operator may be performed independently.

Hereinafter, descriptions will be given of an electrode sheet manufacturing method using the electrode sheet manufacturing apparatus 1 according to an embodiment of the present disclosure, and effects thereof.

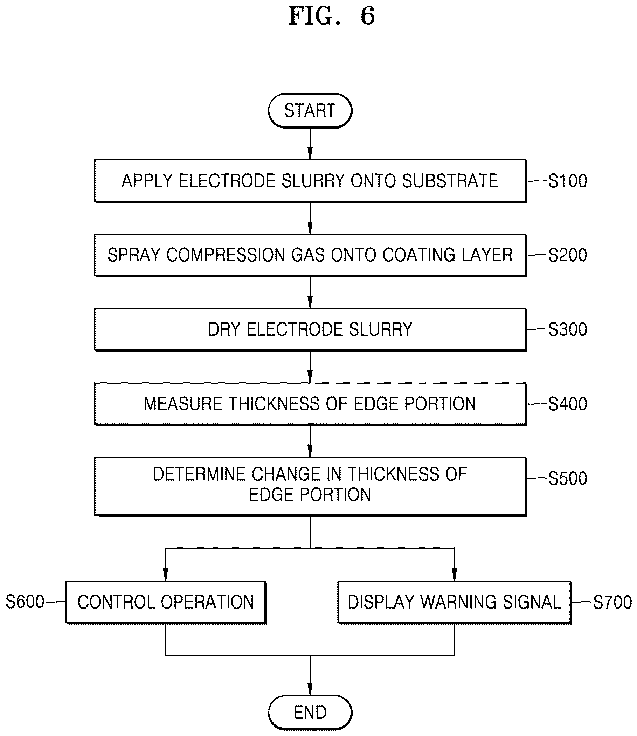

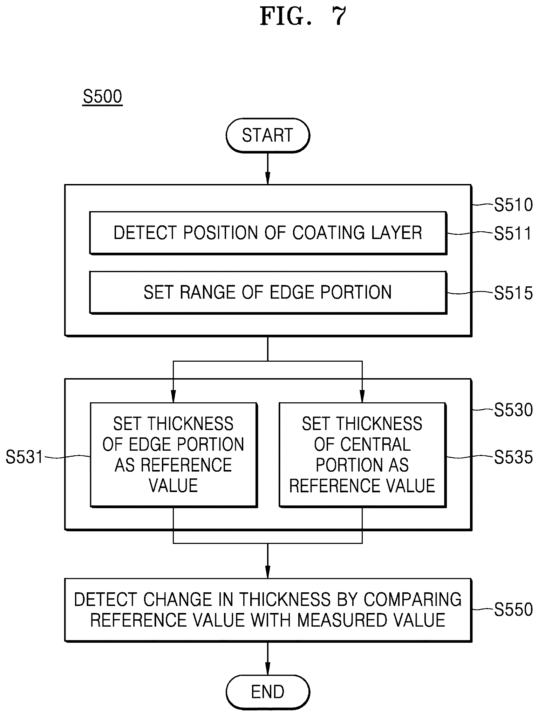

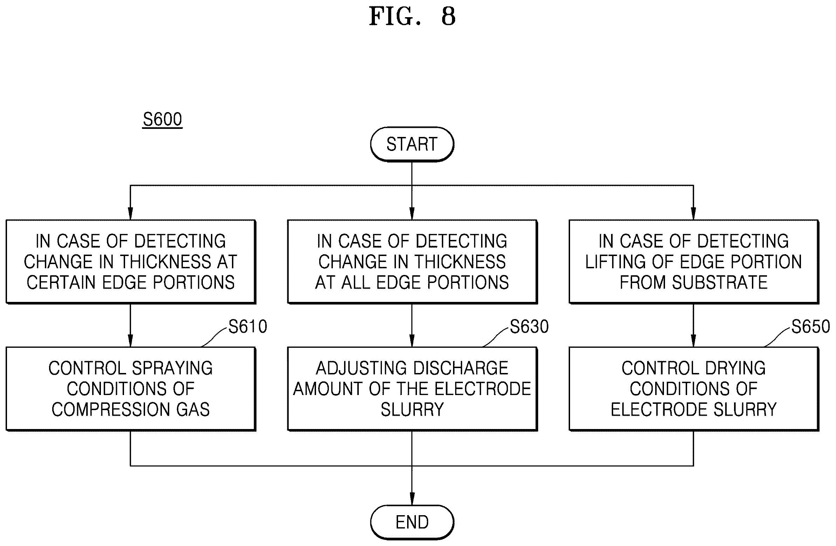

FIG. 6 is a flowchart of an electrode sheet manufacturing method according to an embodiment of the present disclosure. FIG. 7 is a flowchart illustrating some steps of FIG. 6. FIG. 8 is a flowchart illustrating other steps of FIG. 6.

Referring to FIG. 6, an electrode sheet manufacturing method according to an embodiment of the present disclosure may include forming a coating layer by applying electrode slurry onto a substrate (S100), adjusting a thickness of the coating layer by spraying compression gas onto the coating layer (S200), drying the electrode slurry applied on the substrate (S300), measuring a thickness of an edge portion forming an edge of the coating layer (S400), and determining a change in the thickness of the edge portion by comparing the measured thickness of the edge portion with an identified or a preset reference value (S500).

In the electrode sheet manufacturing method according to an embodiment of the present disclosure, the substrate 10 may be formed to extend along a longitudinal direction and may be transferred through the transfer part DR in a roll-to-roll manner along the longitudinal direction. While the substrate 10 is transferred, the electrode slurry may be applied to form the coating layer 30, and may pass through each of the spraying part 200, the drying part 300, and the measurement part 400.

In some embodiments, the series of steps of the electrode sheet manufacturing method to be described later may be steps that are performed while the substrate 10 is transferred on the transport part DR.

Referring to FIG. 6, the step (S100) of forming the coating layer by applying the electrode slurry onto the substrate may be performed by the slot die 110 of the coating part 100. In some embodiments, the coating part 100 may apply the electrode slurry onto the substrate 10 through the slot die 110.

In some embodiments, the slot die 110 may be connected to a slurry pump (not illustrated in the drawing). The slurry pump may mix electrode materials (active material, binder, and solvent) to create the electrode slurry, and transfer the created electrode slurry to the slot die 110, thus advantageously facilitating the smooth application of the electrode slurry onto the substrate 10.

The slurry pump according to an embodiment of the present disclosure may be controlled by the control part 500, so that a flow rate of the electrode slurry supplied to the slot die 110 may be adjusted.

The step (S100) of forming the coating layer by applying the electrode slurry onto the substrate according to an embodiment of the present disclosure may be a step of applying the electrode slurry onto the substrate 10 which is being transferred along a transfer direction. In this instance, the one or more of coating layers 30 may be arranged spaced apart along a width direction of the substrate 10.

In some embodiments, the uncoated portion 10a, which is an area where the electrode slurry is not applied, may be formed between the one or more of coating layers 30 that are spaced apart from each other.

Referring to FIGS. 2 and 6, the step (S200) of adjusting the thickness of the coating layer by spraying the compression gas onto the coating layer may be a step of spraying the compression gas G using the spraying nozzles 210 of the spraying part 200. The step (S200) of adjusting the thickness of the coating layer by spraying the compression gas onto the coating layer may also be a step of adjusting the coating layer 30 to have a desired shape and thickness by adjusting the angle, position, and/or spraying pressure of the spraying nozzle 210.

Referring to FIGS. 1 and 6, the step (S300) of drying the electrode slurry applied on the substrate may be a step of passing the substrate 10 through the drying part 300. The substrate 10 may receive a heat source H of a set (e.g., constant) temperature while passing through the drying part 300, so that moisture on the substrate 10 may evaporate and the shape of the coating layer 30 may be maintained.

Referring to FIGS. 1, 3, and 6, the step (S400) of measuring the thickness of the edge portion forming the edge of the coating layer may be a step in which the measurement part 400 spaced apart from the substrate 10 measures the thickness of the substrate 10 and transmits the measured thickness value to the control part 500.

One or more (e.g., each) of the one or more of measuring sensors 410 may be arranged between the coating layers 30, to measure (e.g., concurrently or simultaneously measure) the thickness of one uncoated portion 10a and thicknesses of two edge portions 30a arranged on opposite sides of the uncoated portion 10a. In some embodiments, a measurement range of one measuring sensor 410 may be defined as a sensor measurement area SMA.

The measuring sensor 410 according to an embodiment of the present disclosure may measure the thickness of the edge portion 30a at intervals of about 0.1 mm in the width direction. The thickness values measured at the intervals of about 0.1 mm may be aggregated in about 1 mm units and transmitted to the control part 500.

Referring to FIGS. 6 and 7, the step (S500) of determining the change in the thickness of the edge portion by comparing the measured thickness of the edge portion with an identified or a preset reference value may include detecting a position of the edge portion (S510), setting a reference value for the thickness of the edge portion (S530), and detecting the change in the thickness by comparing the reference value with the measured thickness value.

The step (S510) of detecting the position of the edge portion may include detecting a position of the coating layer based on an identified or preset conditions (S511) and setting an area, which is located at an identified or a preset distance from one end of the coating layer whose position has been detected, as a range of the edge portion (S515).

In the step (S511) of detecting the position of the coating layer based on the identified or preset conditions according to an embodiment of the present disclosure, the conditions may be set based on the thickness of the substrate 10.

In some embodiments, in the event that a thickness value detected by the measuring sensor 410 exceeds one multiple of a normal thickness of the substrate 10, the control part 500 may determine that the coating layer 30 exists in a corresponding area. For example, in case that the thickness value of the substrate 10 is set to 8 µm and a thickness value measured by the measuring sensor 410 exceeds 8 µm, the corresponding area may be recognized as the coating layer 30.

Referring to FIG. 4, the coating layers 30 may be located on opposite sides of the uncoated portion 10a. In this scenario, the measuring sensor 410 may recognize two coating layers 30 at the corresponding step.

Referring to FIGS. 4 and 7, the step (S515) of setting the area located at the identified or preset distance from the one end of the coating layer whose position has been detected as the range of the edge portion may be a step of accurately setting a measurement range of the sensor measurement area SMA.

In some embodiments, the edge portion 30a, which is the edge of the coating layer 30, may be set as an area located at a position which is in a range from approximately 1 mm to approximately 3 mm apart from the one end of the coating layer 30 in a direction toward the center of the coating layer 30. In other examples, the edge portion 30a may be an area corresponding to a range from approximately 1 mm to approximately 3 mm from the one end of the coating layer 30 along the width direction of the coating layer 30.

However, embodiments are not limited thereto, and the edge portion 30a may be set as a narrower area as needed, and may be set as a wider area corresponding to a range of at least 3 mm from the one end of the coating layer 30 along the width direction of the coating layer 30.

In some embodiments, the area of the uncoated portion 10a arranged between the coating layers 30 and the area of the edge portions 30a arranged on the opposite sides of the uncoated portion 10a may be set (e.g., accurately set).

Referring to FIG. 7, the step (S530) of setting the reference value of the thickness of the edge portion may include setting an average of thickness values of the edge portion, measured one or more times, as the reference value (S531), and setting a thickness of a central portion as the reference value (S535).

The step (S531) of setting the average of the thickness values of the edge portion, measured the one or more of times, as the reference value may involve performing one or more measurements for the thickness of the edge portion 30a at one or more (e.g., each) measurement position where the measuring sensor 410 is arranged (e.g., immediately arranged) after a coating operation begins.

The step of setting the reference value may involve measuring the thickness of the edge portion 30a the one or more of times after a waiting period for coating stabilization has passed since the coating part 100 began the coating operation. In this instance, an interval at which the measuring sensor 410 collects thickness value data may be once per second. However, embodiments are not limited thereto, and data may be collected at various intervals as needed or desired.

In some embodiments, the reference value may be an average value derived by measuring the thickness of the edge portion 30a ten times at a measurement position. In this instance, the reference value may be stored in the control part 500 to be used as a criterion for determining a normal state of the thickness of the edge portion 30a, which is measured (e.g., in real time).

Referring to FIGS. 4 and 7, the step (S535) of setting the thickness of the central portion as the reference value may involve setting an identified or a preset thickness of the central portion 30b of the coating part 100 as a criterion for determining the change in the thickness of the edge portion 30a.

In some embodiments, the thickness value of the central portion 30b may be a value obtained by measuring the thickness of the central portion 30b one or more times, and calculating an average of the measurements, similar to the step of setting the average of the thickness values of the edge portion 30a as the reference value.

In some embodiments, the thickness value of the central portion 30b may be a value which is measured in real time (with a delay less than 0.2 s, preferably less than 0.1 s) by another component inside the electrode sheet manufacturing apparatus 1 and transmitted to the control part 500.

The control part 500 according to an embodiment of the present disclosure may set the thickness value of the central portion 30b derived in such a manner as a criterion for determining the normal state of the thickness of the edge portion 30a.

Referring to FIG. 7, the step (S550) of detecting the thickness change by comparing the reference value with the measured value may involve comparing the previously set reference value with the thickness value of the edge portion 30a measured (e.g., in real time) by the measurement part 400, and detecting the thickness change in case that the thickness value of the edge portion 30a exceeds a range, which is identified or preset with respect to the reference value.

The control part 500 according to an embodiment of the present disclosure may detect the change in the thickness of the edge portion 30a in the event that the thickness value of the edge portion 30a, measured for example in real time (with a delay less than 0.2 s, preferably less than 0.1 s), increases or decreases by at least 10% compared to the reference value, in the event that the average value of the thicknesses of the edge portion 30a is set as the reference value. In the event that the change in the thickness is detected, the control part 500 may determine the position of the edge portion 30a where the change is detected and control coating, spraying, and drying conditions of the corresponding position (area).

According to an optional embodiment, the control part 500 may detect the change in the thickness of the edge portion 30a in the event that the thickness value of the edge portion 30a, measured in real time, is less than about 70% of the reference value, in the event that the thickness value of the central portion 30b is set as the reference value. In the event that the change in the thickness is detected, the control part 500 may determine the position of the edge portion 30a where the change is detected and control coating, spraying, and/or drying conditions of the corresponding position (area).

Referring to FIG. 6, the electrode sheet manufacturing method according to an embodiment of the present disclosure may further include controlling an operation of any one of the step of forming the coating layer, the step of spraying the compression gas, and/or the step of drying the electrode slurry, in the event that the change in the thickness of the edge portion is detected.

The step of controlling the operation may involve restoring the thickness of the edge portion 30a, which has changed, to an original state by controlling the operation and operating conditions of any one of the coating part 100, the spraying part 200, and/or the drying part 300, which are involved in the formation of the thickness of the coating layer 30.

In the previously known electrode sheet manufacturing apparatus, it was generally difficult to check the thickness of the edge portion in real time, so that defects could be found after additional processing of the electrode sheet was performed, which could result in significant material loss.

According to an embodiment of the present disclosure of the electrode sheet manufacturing apparatus 1 and the manufacturing method thereof, after the coating layer 30 is formed on the substrate 10, the one or more of measuring sensors 410 may be fixed above the edge portions 30a forming the edges of the coating layer 30, to measure the thickness of the coating layer 30 in real time, and in the event that a change in thickness is detected, a response (e.g., an immediate response within less than 0.2 s) may be made to the change in the thickness to minimize material loss.

Referring to FIG. 8, the step (S600) of controlling the operation in the event that the change in the thickness of the edge portion is detected may include adjusting one of spraying pressure, spraying angle, and/or spraying position of compression gas sprayed onto corresponding edge portions in the event that a change in thickness is detected at certain edge portions among the one or more of edge portions formed on the substrate.

In some embodiments, the control part 500 may control the operation of the spraying part 200 to adjust the spraying pressure, spraying angle, and/or spraying position of the compression gas G. In general, the thickness of the coating layer 30 may be relatively thin in the event that the spraying pressure of the compression gas G is strong, while the thickness of the coating layer 30 may be relatively thick in case that the spraying pressure of the compression gas G is weak.

In some embodiments, based on detecting the change in the thickness of the certain edge portions 30a, the control part 500 may control the spraying nozzles 210 arranged at positions corresponding to the corresponding edge portions 30a.

In some embodiments, in the event that an increase in thickness of the certain edge portions 30a is detected, the control part 500 may increase the spraying pressure of the spraying nozzles 210 arranged above the corresponding edge portions 30a to reduce the thickness of the edge portions 30a to an original thickness. In another example, in case that a decrease in thickness of the certain edge portions 30a is detected, the control part 500 may decrease the spraying pressure of the spraying nozzles 210 arranged above the corresponding edge portions 30a to increase the thickness of the edge portions 30a to an original thickness.

In some embodiments, the control part 500 may more precisely adjust the thickness and shape of the edge portion 30a by adjusting the spraying position, spraying angle, and/or the like of the spraying part 200.

Referring to FIG. 8, the step (S600) of controlling the operation in the event that the change in the thickness of the edge portion is detected may include adjusting a discharge amount of the electrode slurry applied in the event that the change in thickness is detected at one or more (e.g., all) the one or more of edge portions formed on the substrate (S630).

In general, in case that the change in thickness is detected at all the edge portions 30a, it may be a problem with an amount of electrode slurry applied on the substrate 10, rather than a problem with a specific spraying nozzle 210. In some embodiments, in the event that the change in thickness is detected at all edge portions 30a, the control part 500 may adjust a discharge amount of the electrode slurry applied by the coating part 100 to adjust the thickness of all the edge portions 30a.

However, the operation of the coating part 100 may not always be controlled only when change is detected in the thickness values of all the edge portions 30a. For example, in the event that the change occurs in the thickness values of at least 80% of the edge portions 30a, a criterion, such as a method of controlling the coating part 100, may be set in various ways as needed or desired.

In some embodiments, the control part 500 may control the operation of the slurry pump (not illustrated in the drawing) connected to the slot die 110, and thus, a flow rate of the electrode slurry supplied to the slot die 110 and an amount of the electrode slurry applied to the substrate 10 may be appropriately adjusted depending on the change in the thickness of the edge portion 30a.

For example, the discharge amount of the electrode slurry may decrease by the operation of the control part 500 in the event that the thickness of all the edge portions 30a increases, while the discharge amount of the electrode slurry may increase in the evemt that the thickness of all the edge portions 30a decreases.

Referring to FIG. 8, the step (S600) of controlling the operation in the event that the change in the thickness of the edge portion is detected may include controlling drying conditions of the electrode slurry in the event that the edge portion being lifted off from the substrate is detected (S650).

The control part 500 may detect the lifting of the edge portion 30a in the event that the thickness of the edge portion 30a increases (e.g., increases excessively) beyond a normal or threshold range of a thickness increase. The lifting phenomenon may generally be involved in the drying conditions in the drying part 300. In some embodiments, the control part 500 may adjust the drying conditions by controlling the operation of the drying part 300 in the event that the lifting phenomenon is detected.

The control part 500 may adjust internal temperature of the drying part 300 and an amount of gas circulating inside the drying part 300. In some embodiments, the control part 500 may reduce the internal temperature of the drying part 300 and increase the amount of gas circulating in the drying part 300 to reduce or suppress the lifting phenomenon of the edge portion 30a.

Referring to FIG. 6, the electrode sheet manufacturing method according to an embodiment of the present disclosure may include displaying a warning signal in case that the change in the thickness of the edge portion is detected (S700).

The step of displaying the warning signal may be performed through the display part 600. The display part 600 may display visual information or output an alarm sound related to the change in the thickness of the edge portion 30a.

In the event that the warning signal is transmitted through the display part 600, an operator who recognizes the warning signal may control the operation of the coating part 100, the spraying part 200, and the drying part 300. In some embodiments, similar to the control part 500 controlling the operation of one or more (e.g., each) component, the operator may control the operation of the spraying part 200 in the event that the change in thickness is detected at certain edge portions 30a, and may control the operation of the coating part 100 in the event that the change in thickness is detected at all the edge portions 30a. The operator may also control the operation of the drying part 300 in the event that the lifting phenomenon is detected through the display part 600.

In some embodiments, in the event that the change in the thickness of the edge portion 30a is detected, the operation of one or more (e.g., each) component may be controlled by the control part 500, but may also be controlled by the operator who recognizes the change in the thickness. The operation control by the control part 500 and the operation control by the operator may be performed independently, but are not limited thereto and may also be performed simultaneously or concurrently.

In an electrode sheet manufacturing apparatus and a manufacturing method thereof according to one or more embodiments, a thickness of an edge portion, which is an edge of a coating layer, may be measured (e.g., in real time) and a warning signal may be output based on detecting a change in thickness to minimize or reduce production material loss.

Operations of different devices may be controlled depending on a type of thickness change detected, which may promote as substantially even surface for a produced electrode sheet and enhance quality of the electrode sheet.

In an electrode sheet manufacturing apparatus according to one or more embodiments, a thickness of an edge portion forming an edge of a coating layer may be measured (e.g., in real time) and a warning signal may be output based on detecting a change in thickness to minimize or reduce production material loss.

Operations of different devices may be controlled depending on a type of thickness change detected, which may promote a substantially even surface for a produced electrode sheet and enhance quality of the electrode sheet.

However, the effects obtainable through the disclosure are not limited to the effects described above, and other technical effects not mentioned will be clearly understood by those skilled in the art from the description of the disclosure described below.

While the disclosure has been herein described with regard to a limited number of embodiments and drawings, the disclosure is not limited thereto and it will be obvious to those skilled in the art that various modifications and changes may be made thereto within the technical aspects of the present disclosure and the equivalent scope of the appended claims.

## Claims

1. An electrode sheet manufacturing apparatus (1) comprising:
a coating part (100) configured to apply electrode slurry onto a substrate (10) to form a coating layer (30);
a spraying part (200) configured to spray compression gas onto the coating layer (30);
a drying part (300) configured to supply a heat source onto the substrate (10) to dry the coating layer (30);
a measurement part (400) arranged spaced apart from the substrate (10) and configured to measure a thickness of an edge portion (30a) forming an edge of the coating layer (30); and
a control part (500) electrically connected to the measurement part (400) and configured to detect a change in thickness of the edge portion (30a) based on receipt of a thickness value of the edge portion (30a) from the measurement part.

2. The electrode sheet manufacturing apparatus (1) of claim 1, further comprising
a display part (600) configured to receive an electric signal from the control part, and display a warning signal based on detecting the change in the thickness of the edge portion (30a).

3. The electrode sheet manufacturing apparatus (1) of claim 1 or 2, wherein
the control part (500) is configured to receive an electrical signal from the measurement part (400) and control an operation of one of the coating part (100), the spraying part (200), or the drying part (300) based on detecting the change in the thickness of the edge portion (30a).

4. The electrode sheet manufacturing apparatus (1) of claims 1 to 3, wherein
the coating layer (30) includes a plurality of coating layers (30) on the substrate (10), wherein the plurality of coating layers (30) are spaced apart from one another in a width direction of the substrate (10).

5. The electrode sheet manufacturing apparatus (1) of claim 4, wherein
the measurement part (400) comprises a plurality of measuring sensors (410), and
each of the plurality of measuring sensors (410) is arranged between the plurality of coating layers (30) arranged spaced apart from one another and/or wherein
each of the plurality of measuring sensors (410) is configured to concurrently measure a thickness of an uncoated portion (10a) as an area and thickness of first and second edge portions (30a) forming first and second edges of the coating layers (30) located on opposite sides of the uncoated portion (10a), wherein the uncoated portion (10a) is free of the electrode slurry and is located between neighboring coating layers (30).

6. The electrode sheet manufacturing apparatus (1) of claims 1 to 5, wherein the coating part (100) further includes a slurry pump connected to a slot die (110), wherein the slurry pump mix electrode materials to create the electrode slurry and transfer the created electrode slurry to the slot die (110), thus advantageously facilitating the smooth application of the electrode slurry onto the substrate (10).

7. The electrode sheet manufacturing apparatus (1) of claims 3 to 6, wherein
the edge portion (30a) includes a plurality of edge portions (30a) on the substrate, and
the control part (500) is configured to control an amount of the electrode slurry applied by the coating part (100) based on detecting the change in the thickness at the plurality of edge portions (30a).

8. An electrode sheet manufacturing method comprising:
forming a coating layer (30) by applying electrode slurry onto a substrate (10);
adjusting a thickness of the coating layer (30) by spraying compression gas onto the coating layer (30);
drying the electrode slurry applied on the substrate (10);
measuring a thickness of an edge portion (30a) forming an edge of the coating layer (30); and
determining a change in the thickness of the edge portion (30a) by comparing the measured thickness value of the edge portion (30a) with a reference value for the thickness of the edge portion (30a).

9. The electrode sheet manufacturing method of claim 8, wherein
the determining the change in the thickness of the edge portion (30a) comprises detecting a position of the coating layer (30) based on one or more conditions, wherein the one or more conditions are set based on a thickness of the substrate (10).

10. The electrode sheet manufacturing method of claim 9, wherein
the determining the change in the thickness of the edge portion (30a) comprises setting an area located at a distance from one end of the coating layer (30) as a range of the edge portion (30a).

11. The electrode sheet manufacturing method of claims 8 to 10, wherein
the determining the change in the thickness of the edge portion (30a) comprises:
setting a reference value for the thickness of the edge portion (30a); and
detecting the change in the thickness of the edge portion (30a) by comparing the measured thickness value of the edge portion (30a) with the reference value.

12. The electrode sheet manufacturing method of claim 11, wherein
the setting the reference value for the thickness of the edge portion (30a) comprises setting an average of thickness values of the edge portion (30a), measured a plurality of times, as the reference value.

13. The electrode sheet manufacturing method of claims 8 to 12, further comprising
displaying a warning signal based on detecting the change in the thickness of the edge portion (30a).

14. The electrode sheet manufacturing method of claims 8 to 13, further comprising
controlling an operation of one of forming the coating layer (30), spraying the compression gas, or drying the electrode slurry based on detecting the change in the thickness of the edge portion (30a).

15. The electrode sheet manufacturing method of claim 14, wherein
the controlling the operation based on detecting the change in the thickness of the edge portion (30a) comprises:
controlling an amount of the applied electrode slurry based on detecting the change in the thickness at a plurality of edge portions (30a) formed on the substrate (10).
